(19) Europäisches Patentamt
European Patent Office
Office européen des brevets

(11) **EP 4 509 272 A1**

(12) **EUROPEAN PATENT APPLICATION**
published in accordance with Art. 153(4) EPC

(43) Date of publication:
**19.02.2025   Bulletin 2025/08**

(21) Application number: **22951795.8**

(22) Date of filing: **18.11.2022**

(51) International Patent Classification (IPC):
**B25J 9/16** (2006.01)

(52) Cooperative Patent Classification (CPC):
Y02P 90/02

(86) International application number:
**PCT/CN2022/132715**

(87) International publication number:
**WO 2024/016534 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.07.2022   CN 202210842420**

(71) Applicant: **Shanghai Sage Intelligent Technology Co., Ltd.**
**Minhang District**
**Shanghai 200240 (CN)**

(72) Inventors:
• **ZHANG, Jianzheng**
  **Shanghai 200240 (CN)**
• **WEI, Kun**
  **Shanghai 200240 (CN)**
• **DONG, Yi**
  **Shanghai 200240 (CN)**
• **ZOU, Jinpei**
  **Shanghai 200240 (CN)**
• **LI, Fangbao**
  **Shanghai 200240 (CN)**

(74) Representative: **Hofstetter, Schurack & Partner**
**Patent- und Rechtsanwaltskanzlei**
**PartG mbB**
**Balanstraße 73 / Haus 31A**
**81541 München (DE)**

(54) **METHOD FOR TUNING OVERALL PERFORMANCE OF ROBOT MANIPULATOR SERVO SYSTEMS**

(57)     A method for tuning the overall performance of robot manipulator servo systems. A manipulator digital twin system is used to adjust parameters of a multi-axis manipulator servo system; and meanwhile, a grey correlation method is used to analyze which axial joint servo module among multiple axial joint servo modules has the lowest comprehensive performance, so as to find the axis for control parameter tuning. In the method, performance tuning is performed by taking an overall performance index of the manipulator servo system as a control parameter, thereby avoiding use of one-by-one parameter adjustment methods in the traditional technology, improving the overall tuning precision, and simplifying the tuning process.

Fig. 1

EP 4 509 272 A1

## Description

## Technical Field

The present invention belongs to the field of intelligent robot joint servo control, and particularly relates to a method for tuning the overall performance of robot manipulator servo systems.

## Background Art

The multi-axis manipulator is generally composed of 4-7 axes. The common 6-axis robot has 6 degrees of freedom, which means that there are 6 servo motor joints, and correspondingly, there are 6 servo drives for driving. Before leaving the factory, when the robot is installed in the field, it is necessary to debug the manipulator performance, that is, to debug the parameters of six servo systems, so as to optimize its performance and meet the operation needs.

In the prior art, the servo control parameters are generally adjusted manually according to experience, and adjusted successively from axis to axis until the final overall performance meets the requirements. Some servo drive products have a certain function of automatic adjustment of servo parameters, which can actually reduce the workload of debugging and save debugging time to a certain extent. However, when the manipulator is installed in the field working conditions in the later stage, it still needs further fine adjustment and debugging in turn from axis to axis. There are still some problems such as high requirements for experience and knowledge of debugging personnel, time-consuming and laborious debugging.

Some servo drives are provided with PC based host debugging software, and the debugging effect can be seen on the PC based host debugging software, such as curves of servo position tracking, speed tracking, etc. or a system response curve, etc. The debugging personnel can judge the debugging effect according to the good or bad of these debugging results. This kind of debugging mode is common in middle and high level servo systems, which provides a good tool for servo debugging and improves debugging efficiency and effect.

The multi-axis manipulator is the carrier of the multi-axis servo system. Even if each set of servo system is adjusted by parameters, whether the overall performance is optimal or not depends on whether the final performance meets the operational requirements should be considered. If the final requirements are not met, it is still necessary to find the reason and re-adjust some servo system parameters.

In addition, the determination of the positioning accuracy of the end of the manipulator is a cumbersome matter in the prior art. It lies in that it needs other auxiliary equipment or special experimental conditions to test its positioning accuracy and trajectory tracking accuracy and other indicators. The determination process has a relatively high requirement for auxiliary equipment or experimental conditions, and requiring professional personnel to complete the test, calculation and finally obtain the accuracy data.

Therefore, the main problems of the prior art background are that according to manual experience or auxiliary debugging software, parameter adjustment of each servo system is performed one by one, which is time-consuming and labor-intensive. The traditional means is backward, so the whole final performance cannot be controlled. Finally, it can only be verified whether it meets the requirements by experimental operation.

## Summary of the Invention

In view of this, an embodiment of the present invention provides a method for tuning the overall performance of robot manipulator servo systems, wherein parameters of a servo system of a multi-axis manipulator are adjusted using a manipulator digital twin system; and meanwhile, the grey correlation method is used to analyze which axial joint servo module among multiple axial joint servo modules has the lowest comprehensive performance, so as to find the axis for control parameter tuning. In the present invention, the overall performance index of the servo system of the manipulator is used as the control parameter to perform performance tuning, thereby avoiding the one-by-one parameter adjustment methods in the traditional technology, improving the overall tuning progress and simplifying the tuning process.

In order to achieve the above technical object, the specific technical solution adopted by the present invention is as follows.

A method for optimizing the overall performance of robot manipulator servo systems is provided, wherein the servo system of the manipulator includes at least two axis joint servo modules connected in sequence, characterized in that the performance optimizing method includes the steps of

S101, establishing a manipulator digital twin system composed of digital twin models based on each joint servo module of the manipulator of the robot;

S102, executing a performance feedback action of the servo system of the manipulator in the digital twin system;

collecting expected result data and real result data from the digital twin system performing the performance feedback action;

S103, deriving grey correlation related data based on the expected result data and the real result data;

S104, evaluating the execution comprehensive performance of each of the axis joints by a grey correlation algorithm based on the grey correlation related data; and

S105, tuning the axis joint servo module with a low comprehensive performance.

Further, the tuning method further includes S106 of repeating the S102-S105 to further optimize the servo system of the manipulator.

Further, the grey correlation related data includes: a position tracking error $e_\theta$, a position loop gain value $K_p$, a velocity loop gain value $K_v$, a velocity loop integral gain value $K_i$, and a velocity error $e_w$ for the axis joint servo module performing the performance feedback action; and
the position tracking error $e_\theta$ and the velocity error $e_w$ are based on a comparison of the expected result data with the real result data.

Furthermore, the method for evaluating the execution difference of each of the axis joint servo modules based on the grey correlation algorithm specifically includes:
setting a target matrix:

$$X_0 = (x_0(1),\ x_0(2),\ x_0(3),\ x_0(4),\ x_0(5))$$

If the test result of the position tracking error of the servo system of the manipulator is expressed in the form of an orthogonal matrix as:

$X_i = (x_i(1),\ x_i(2),\ x_i(3),\ x_i(4),\ x_i(5))$, i=1, 2, ..., n; where n represents the number of the axis joint servo modules;

the grey correlation coefficient between the test result and the target value is expressed as:

$$\gamma(x_0(k), x_i(k)) = \frac{\rho max_i max_k |x_0(k) - x_i(k)|}{|x_0(k) - x_i(k)| + \rho max_i max_k |x_0(k) - x_i(k)|}$$

where $\gamma$ represents the correlation degree between $X_i$ and $X_0$ at a point k, and the mean value thereof is the grey correlation degree, as shown in the following formula:

$$\xi(X_0, X_i) = \frac{1}{n} \sum_{k=1}^{n} \gamma(x_0(k), x_i(k))$$

where k=1, 2, ..., 5; i=1, 2, ..., n; and $\rho$ is a constant.

Further, the data for constructing the twin model includes:

$\theta(t)$: an angle value of the axis joint servo module changing with time in real time;

$\Omega(t)$: a speed value of the axis joint servo module changing with time in real time;

$i(t)$: a current value of the axis joint servo module changing with time in real time;

$\alpha(t)$: an acceleration value of the axis joint servo module changing with time in real time.

Furthermore, the data for constructing the twin model further includes: visual sensor information, torque sensor information, and safety sensor information.

Further, the digital twin system is further configured for acquiring a motion equation of the manipulator of the performance feedback action to generate a command trajectory.

Further, the digital twin system is provided with a graphical interface for displaying an attitude change trajectory of each of the axis joint servo modules in an xyz space and the command trajectory.

Further, the attitude change trajectory and the command trajectory are based on a centroid point trajectory description.

Furthermore, the method further includes an initial parameter adjustment process before the S101;

the initial parameter adjustment process includes the steps of

S201, initializing and adjusting control parameters of the servo system of the manipulator;

S202, initializing and adjusting control parameters sequentially according to the order from the end to the root of each of the axis joint servo modules in the servo system of the manipulator;

S203, executing a set trajectory movement by the servo system of the manipulator;

S204, comparing whether an end effector of the manipulator reaches a specified target point based on the digital twin system, and if so, completing the initial parameter adjustment process, and if not, performing the following steps:

S301, selecting, based on the digital twin system, the axis joint servo module with the maximum tracking error to perform initialization and tuning;

S302, whether the tracking error of the axis joint servo module after the initialization and tuning decreases, and if so, skipping to the S203, and if not, adjusting the relay feedback parameter value of the axis joint servo module with the maximum tracking error or manually setting the axis control parameter of the axis joint servo module with the maximum tracking error; and

after manually setting the axis control parameter of the axis joint servo module with the maximum tracking error, skipping to the S301.

With the above technical solution, the present invention can also bring about the following advantageous effects.

The present invention takes the overall performance index of the servo system of the manipulator as a control parameter adjustment target, and is real-time visible following the action of an actual servo system of the manipulator based on the digital twin system. It has the advantages of automatic parameter adjustment, intellectualization, dynamic and intuitive adjustment process, visual adjustment effect and instant presentation of result data. Especially in the digital twin model system, the tracking trajectory curves and tracking error data of each servo joint can be displayed in real-time, and it is theoretically unnecessary to actually test the tracking error of each joint. Therefore, in a sense, the measurement of the motion accuracy of the actual servo system of the manipulator can be omitted, and the motion accuracy of the servo system of the manipulator based on the digital twin system has important guiding significance and practical significance in the development and testing stage.

The present invention can better correct and improve the digital twin system by comparing and analyzing the error between the positioning accuracy data actually tested and the positioning accuracy data based on the digital twin system, so as to output more accurate results.

The present invention provides a good experience for on-site debugging, saves parameter debugging time and reduces workload, and improves efficiency.

**Brief Description of the Drawings**

In order to more clearly illustrate the technical solutions in the embodiments of the present invention, the drawings to be used in the description of the embodiments will be briefly introduced below. Obviously, the drawings in the description below only some embodiments of the present invention. It will be apparent to those skilled in the art to obtain other drawings according to these drawings without involving any inventive effort.

Fig. 1 is a control logic diagram of an overall performance tuning method in accordance with an embodiment of the present invention;

Fig. 2 is a schematic diagram of data interaction between a servo system of a manipulator and a digital twin system in accordance with an embodiment of the present invention;

Fig. 3 is a schematic diagram of a dynamic display of a digital twin system in accordance with an embodiment of the present invention;

Fig. 4 is a logic block diagram of a centroid point locus calculation in accordance with an embodiment of the present invention;

Fig. 5 is a schematic diagram of a digital twin system in accordance with an embodiment of the present invention;

Fig. 6 is a flow block diagram of an initial parameter adjustment process in accordance with an embodiment of the present invention.

## Detailed Description of the Invention

The embodiments of the present invention are described in detail in combination with the accompanying drawings below.

Other advantages and effects of the present invention will become readily apparent to those skilled in the art from the following detailed description by illustrating the embodiments of the present invention by way of specific examples below. Obviously, the described embodiments are some, but not all, embodiments of the present invention. The present invention may be practiced or applied in various other specific embodiments. Various details in the description may be modified or varied from different perspectives and applications without departing from the spirit of the application. It should be noted that the embodiments and the features in the embodiments below may be combined with one another without conflict. Based on the examples in the disclosure, all other examples obtained by a person skilled in the art without involving any inventive effort are within the scope of protection of the disclosure.

It is intended that the following describe various aspects of embodiments within the scope of the appended claims. It should be apparent that aspects described herein may be embodied in a wide variety of forms and that any specific structure and/or function described herein is merely illustrative. Based on the present invention, one skilled in the art will appreciate that one aspect described herein may be implemented independently of any other aspects, and that two or more of these aspects may be combined in various ways. For example, an apparatus may be implemented and/or a method practiced using any number of the aspects set forth herein. Additionally, such an apparatus may be implemented and/or such a method may be practiced using other structure and/or functionality in addition to one or more of the aspects set forth herein.

further It should be noted that the figures provided in the following examples merely illustrate the basic idea of the present invention in a schematic way. Thus, only the components related to the present invention are shown in the drawings instead of being drawn according to the number, shape and size of the components in an actual implementation. In an actual implementation, the type, number and proportion of the components may be changed at will, and the layout of the components may be more complicated.

In addition, in the following description, specific details are provided to facilitate a thorough understanding of the examples. However, it will be understood by those skilled in the art that the aspects may be practiced without these specific details.

In an embodiment of the present invention, a method for tuning the overall performance of robot manipulator servo systems is proposed. The servo system of the manipulator includes at least two axis joint servo modules connected in sequence. The performance optimizing method includes the steps of:

S101, establishing a manipulator digital twin system composed of digital twin models based on each joint servo module of the manipulator of the robot;

S102, executing a performance feedback action of the servo system of the manipulator in the digital twin system; collecting expected result data and real result data from the digital twin system performing the performance feedback action;

S103, deriving grey correlation related data based on the expected result data and the real result data;

S104, evaluating the execution comprehensive performance of each of the axis joints by a grey correlation algorithm based on the grey correlation related data; and

S105, tuning the axis joint servo module with a low comprehensive performance.

The present embodiment establishes a digital twin system for a servo system of a multi-axis manipulator, which can communicate and interact data with the servo system of the manipulator via a communication bus, such as CanOpen or EtherCat, integrated in the manipulator. When the servo system of the manipulator is running, the running parameters of each servo system will be uploaded to the digital twin system in real time, such as motor encoder value, current, speed, position, command and corresponding time information. After receiving the above-mentioned information, the digital twin system performs virtual follow-up (in some embodiments, the virtual follow-up may be displayed according to a graphical interface). Also, the digital twin system also performs operation on an instruction track, and may dynamically compare the situation where an operation trajectory of each axis joint servo module follows a corresponding trajectory command, for example, parameters such as a tracking error.

When the tracking error of the centroid point of the axis joint servo module at the end exceeds the set value, the grey correlation algorithm is used to analyze which axis joint servo module has the lowest comprehensive performance, so as to find the axis for control parameter tuning.

The joint centroid refers to the mass center point of the end axis joint servo module (including a joint motor and a reducer). In the actual servo system of the manipulator end joint, the point is located somewhere inside the joint, which is a virtual point. In the digital twin system, the corresponding point is an actual point, and there are specific coordinate positions and movement trajectories in the xyz coordinate system, which reflect the coordinate positions and movement trajectories of the centroid point of the end axis joint servo module of the actual manipulator. In the digital twin system, when the trajectory of the end joint and the trajectory tracking error are judged, the motion accuracy and performance of the servo system of the manipulator are investigated by starting from the position of the centroid point and its moving trajectory, and the deviation degree between the final trajectory point and the command trajectory.

In the present embodiment, the digital twin system collects the motion equation of the manipulator with the performance feedback action to generate a command trajectory (obtained from expected result data), and collects data of the servo system of the manipulator at the same time to generate a real motion trajectory (obtained from real result data) reflecting each axis joint servo module of the actual servo system of the manipulator. The trajectory and the command trajectory dynamically run in the same coordinate system in the digital twin system at the same time, and performance indicators, such as tracking errors of each joint and dynamic responses, etc. are immediately apparent. At the same time, the grey correlation analysis algorithm module used in the digital twin system will analyze a certain axis joint servo module which has the greatest impact on the end trajectory of the servo system of the manipulator, and then perform automatic parameter tuning operation again on the axis joint servo module. The obtained control parameters may be issued and configured to the axis servo drive, so that the overall system performance of the servo system of the manipulator is optimized.

In some embodiments, the digital twin system is provided with a graphical interface for displaying an attitude change trajectory of each of the axis joint servo modules in an xyz space and the command trajectory. This embodiment allows the operation of the digital twin system to be displayed in a more intuitive manner than the results of the comparison, facilitating analysis by personnel.

In an embodiment, the performance tuning method further includes S106 of repeating the S102-S105 to further optimize the servo system of the manipulator. This embodiment sets the tuning mode as a closed loop, and finds the character module of the axis joint with the worst performance one by one for tuning until the deviation between the running result of the digital twin system and the command trajectory meets the requirements.

The performance tuning method of the present embodiment can be set after the initial parameter adjustment, and the servo system of the manipulator already has a basic performance level, which can meet the operation requirements in most occasions, such as the end position control accuracy requirements. However, where high performance and high accuracy are required, the control parameters need to be fine tuned again. This puts forward new requirements for the servo system of the multi-joint manipulator, such as a servo system of the 6 joint manipulator including Axis 1 (end effector axis joint servo module), Axis 2, Axis 3, Axis 4, Axis 5 and Axis 6 (axis joint servo module directly connected with a manipulator base), which is described in detail as follows.

This embodiment uses a grey correlation algorithm to determine which joint axis servo control parameter or parameters need to be fine-tuned.

Further, when the axis joint servo module to be fine-tuned is determined, the system performs a fine-tuning parameter operation (parameter self-tuning operation) on the axis to obtain a better performance. There are many methods for fine-tuning the control parameters of the axis joint servo module. The present invention does not specify a specific method, but the parameter self-tuning operation of a axis can still be performed by using, for example, a relay feedback method in an embodiment of the present invention.

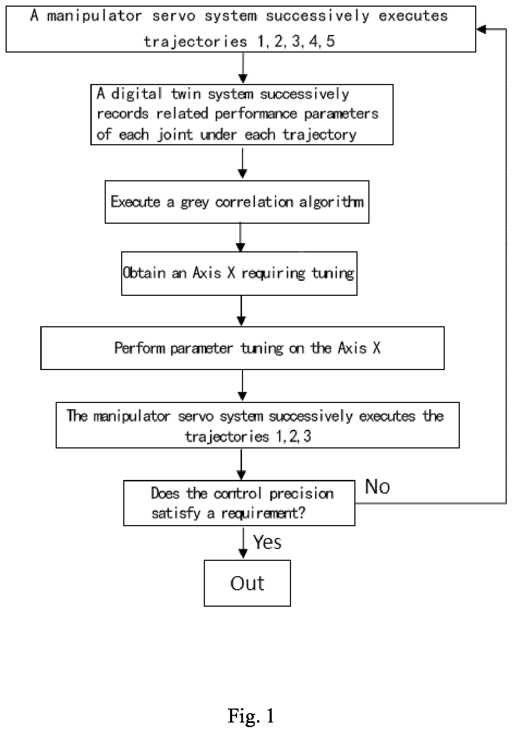

When the axis joint operations requiring fine parameter adjustment are completed, the system re-executes a set of trajectory commands of the servo system of the manipulator to check whether the control requirements are met. The control logic is shown in Fig. 1 below.

As shown in Fig, 1, when the system is allowed to re-fine tune the control parameters, the servo system of the manipulator receives trajectory commands of the digital twin system for a total of five sets. In this process, the background database of the digital twin system automatically records the control parameters and operating data of each axis joint servo module under each set of trajectories. After the execution of the five groups of trajectory instructions, the system executes the correlation algorithm module program to obtain the axis joint servo module which needs further fine adjustment. The system then performs a fine adjustment operation on the servo control parameters of the shaft, obtains new control parameters, and issues same to a corresponding servo drive for updation. Then, the servo system of the manipulator successively executes a group of three trajectory instruction actions, and if both meet the performance index requirements (taking the trajectory tracking error of the centroid point of the end joint as the main evaluation index), the fine adjustment ends; if one is not satisfied, a re-execution is returned.

In the embodiment of the present invention, when the centroid trajectory of the end-axis joint servo module cannot meet the requirements of control accuracy, such as positioning accuracy, it indicates that the servo joint performance of the servo system of the manipulator has not been adjusted to be optimal, and there is a need for further optimization adjustment, but which servo joint performance needs to be adjusted among the six joint axises. This embodiment utilizes a gray correlation analysis method to determine the axis.

According to the basic principle of grey correlation analysis, namely, the relevant basic principle of "executing the grey correlation algorithm module" in Fig. 1 is as follows.

The centroid trajectory error of the end axis joint servo module has a high correlation with the servo performance of each joint of the servo system of the manipulator. It is assumed that each joint servo system has optimal performance, such as high bandwidth, low overshoot, etc. When other influence factors are not considered, such as trajectory command transmission speed, external disturbance influence, etc., the overall operation of the servo system of the manipulator should have high response bandwidth and high accuracy of position control of each axis, so as to ensure that the tracking error of the centroid of the joint servo module at the end is small, and achieve the purpose of tracking trajectory command with high accuracy. However, when the tracking error of the centroid of the end-axis joint servo module is large and the servo performance of each axis joint reaches the requirements, it is still necessary to find the axis which has the greatest influence on the tracking error of the centroid of the end-axis joint servo module to perform control parameter optimization so as to achieve better and better performance, thereby ensuring that the tracking error of the centroid of the end-axis joint servo module is within the required range.

In an embodiment, the grey correlation related data includes: a position tracking error $e_\theta$, a position loop gain value $K_p$, a velocity loop gain value $K_v$, a velocity loop integral gain value $K_i$, and a velocity error $e_w$ for the axis joint servo module performing the performance feedback action.

The position tracking error $e_\theta$ and the velocity error $e_w$ are based on a comparison of the expected result data with the real result data. These five data are used as evaluation source data to evaluate the comprehensive performance of each axis joint servo module.

In the present embodiment, the method for evaluating the execution difference of each of the axis joint servo modules based on the grey correlation algorithm specifically includes:

setting a target matrix:

$$X_0 = (x_0(1),\ x_0(2),\ x_0(3),\ x_0(4),\ x_0(5))$$

If the test result of the position tracking error of the servo system of the manipulator is expressed in the form of an orthogonal matrix as:

$X_i = (x_i(1),\ x_i(2),\ x_i(3),\ x_i(4),\ x_i(5))$, i=1, 2, ..., n; where n represents the number of the axis joint servo modules;

the grey correlation coefficient between the test result and the target value is expressed as:

$$\gamma(x_0(k), x_i(k)) = \frac{\rho max_i max_k |x_0(k) - x_i(k)|}{|x_0(k) - x_i(k)| + \rho max_i max_k |x_0(k) - x_i(k)|}$$

where $\gamma$ represents the correlation degree between $X_i$ and $X_0$ at a point k, and the mean value thereof is the grey correlation degree, as shown in the following formula:

$$\xi(X_0, X_i) = \frac{1}{n} \sum_{k=1}^{n} \gamma(x_0(k), x_i(k))$$

where k=1, 2, ..., 5; i=1, 2, ..., n; and ρ is a constant.

The ρ is taken to be 0.5.

This embodiment is illustrated with 6 groups of the number of axis joint servo modules, and the data matrix table is shown in the following table.

Table 1 Test data (Examples)

| Axis number | $e_\theta$ (e. deg) | $K_p$ | $K_v$ | $K_i$ | $e_w$ (rad/s) |
|---|---|---|---|---|---|
| 1 | 2.0 | 1.5 | 2.1 | 1.4 | 30.0 |
| 2 | 2.3 | 1.2 | 2.5 | 1.0 | 15.0 |
| 3 | 1.8 | 1.9 | 1.7 | 1.3 | 26.0 |
| 4 | 2.8 | 2.0 | 2.2 | 1.6 | 19.0 |
| 5 | 1.8 | 1.4 | 2.8 | 2.2 | 29.0 |
| 6 | 2.2 | 2.1 | 2.9 | 2.5 | 22.0 |

After the data in the table is normalized, the maximum value is calculated and other processing, the system calculates the grey correlation degree of the 6 axises respectively: $\xi(X_0, X_i)$. The highest value indicates that the overall performance of the axis servo is the best, and the lowest value indicates that the performance of the axis servo is the lowest. Then the system will automatically re-optimize the control parameters for the lowest performance axis joint servo module.

In an embodiment, the data for constructing the twin model includes:

θ(t): an angle value of the axis joint servo module changing with time in real time;

Ω(t): a speed value of the axis joint servo module changing with time in real time;

i(t): a current value of the axis joint servo module changing with time in real time;

α(t): an acceleration value of the axis joint servo module changing with time in real time.

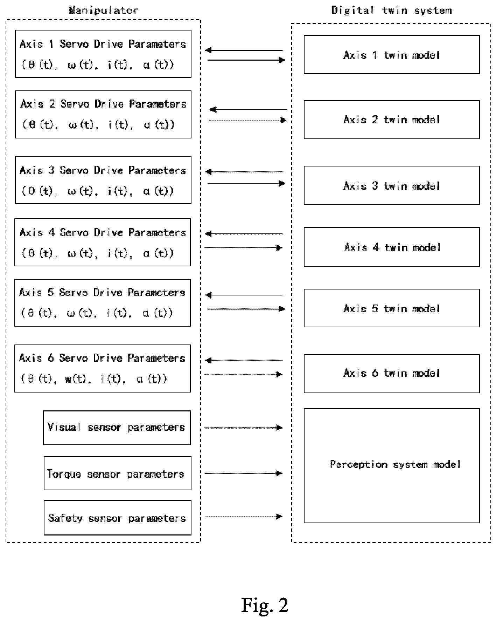

Relevant operating parameters of each axis joint servo module are uploaded to the digital twin system in real time, and the corresponding twin model in the digital twin system is driven to execute the same action. The overall configuration is as shown in Fig. 2.

In the present embodiment, the data for constructing the twin model further includes: visual sensor information, torque sensor information, and safety sensor information.

The joint servo drive transmits the joint motor angle, speed, acceleration and current value to the corresponding twin model in real time to drive the motion of the twin model. In addition, the data of sensors such as a vision sensor, a torque sensor and a safety sensor installed on the servo system of the manipulator are also transmitted to the digital twin in real time as the control input of the perception system model of the digital twin system.

In an embodiment, when the servo drive system of the manipulator completes tuning parameter adjustment or initial parameter adjustment, the latest control parameters obtained may be issued to an actual servo drive of the corresponding servo system of the manipulator by the digital twin system, thereby completing the task of updating the control parameters.

In an implementation, the digital twin system is further configured for acquiring a motion equation of the manipulator of the performance feedback action to generate a command trajectory. The digital twin system is provided with a graphical interface for displaying an attitude change trajectory of each of the axis joint servo modules in an xyz space and the command trajectory. The attitude change trajectory and the command trajectory are based on a centroid point trajectory description.

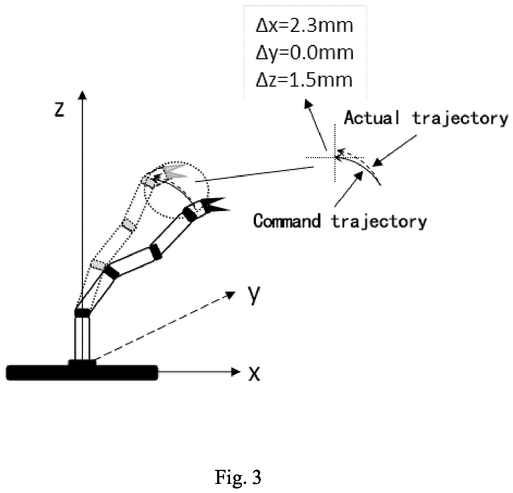

In this embodiment, the motion state of each axis joint servo module of the servo system of the manipulator and the position and attitude change trajectory in the xyz space may be seen on the graphical interface, and the magnitude of the trajectory tracking error may be directly seen or displayed as a data curve after comparing with the command trajectory. A parameter may also be tracked and analyzed separately to assist in parameter adjustment, as shown in Fig. 3.

In Fig. 3, the xy plane is a horizontal plane, xz is a vertical plane with the origin of the xyz coordinates at the origin of the robot servo base.

For simplicity of illustration, let the servo system of the manipulator perform a certain trajectory motion in the xz plane only, and let the end-effector be raised by an angle. Then the digital twin system calculates the initial position of the centroid point of the end axis joint servo module and the trajectory curve of the end axis joint servo module based on the known data such as the physical size of the servo system of the manipulator. When the servo system of the manipulator has finished executing the command trajectory, the system interface will display the command trajectory of the centroid point, the actual running trajectory and the final trajectory point position, and display the trajectory error data of the final stop point.

In addition, the graphical interface may also be used to display and analyze the trajectory and error curve of a single axis joint servo module.

In this embodiment, taking the servo system of the manipulator including a six-axis joint servo module as an example, at the beginning of executing the centroid point trajectory calculation, an initial state of the six axes needs to be collected, namely, a feedback angle value $\theta_x(k0)$ of an encoder of a respective joint motor; X is 1 to 6, representing 6 axes. Also, it collects initial positioning data Dxyz (k0) of the visual sensor. In order to improve the accuracy of the positioning data of the visual sensor, it is necessary to set a special fixed placement reference object on the platform or environment where the servo system of the manipulator is located. In this embodiment, a two-dimensional code can be pasted on the platform where the servo system of the manipulator is located, and then the visual sensor of the servo system of the manipulator can determine the spatial position where the current end joint is located by photographing the two-dimensional code. At the end of the action of the servo system of the manipulator, the final spatial position of the end of the servo system of the manipulator is also determined by photographing a two-dimensional code, so as to assist the centroid trajectory calculation module in the digital twin system to improve the calculation accuracy.

It is to be noted that the two-dimensional code does not have to be replaced by other physical objects with fixed positions in the environment. It is further noted that the vision sensor data is not necessary to calculate the centroid point locus, but merely to assist in improving its computational accuracy. Theoretically, after knowing the initial attitude data of the servo system of the manipulator, the spatial position data of the centroid point may be obtained only according to the real-time angle of each joint motor encoder, the motion equation of the servo system of the manipulator, the physical dimension data of the servo system of the manipulator and so on.

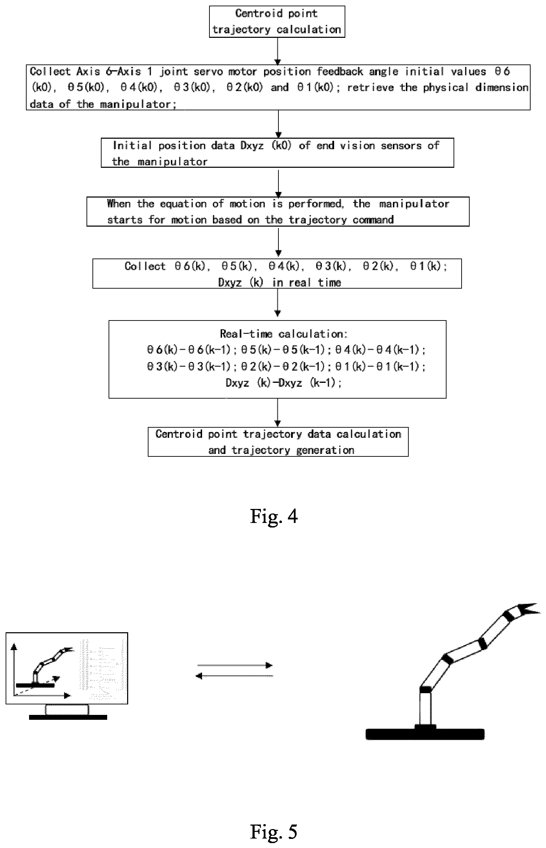

As shown in Fig. 4, during the action of the servo system of the manipulator, the digital twin system collects the angle information of each joint motor encoder and the position coordinate information of the visual sensor in real time, and compares same with the previous value to generate a difference value, so as to calculate the spatial position of the current centroid, and finally generates the centroid spatial trajectory point data.

In an embodiment, the method further includes an initial parameter adjustment process before the S101; the initial parameter adjustment process includes the steps of:

S201, initializing and adjusting control parameters of the servo system of the manipulator;

S202, initializing and adjusting control parameters sequentially according to the order from the end to the root of each of the axis joint servo modules in the servo system of the manipulator;

S203, executing a set trajectory movement by the servo system of the manipulator;

S204, comparing whether an end effector of the manipulator reaches a specified target point based on the digital twin system, and if so, completing the initial parameter adjustment process, and if not, performing the following steps:

S301, selecting, based on the digital twin system, the axis joint servo module with the maximum tracking error to perform initialization and tuning;

S302, whether the tracking error of the axis joint servo module after the initialization and tuning decreases, and if so, skipping to the S203, and if not, adjusting the relay feedback parameter value of the axis joint servo module with the maximum tracking error or manually setting the axis control parameter of the axis joint servo module with the maximum tracking error; and

after manually setting the axis control parameter of the axis joint servo module with the maximum tracking error, skipping to the S301.

As shown in Fig. 5, the digital twin system is installed on a computer with a communication cable connection between the computer and the servo system of the manipulator.

When the initial parameter adjustment is performed, firstly it performs Axis 1 (end effector axis joint servo module), then sequentially performs Axis 2, Axis 3, Axis 4 and Axis 5, and finally performs Axis 6 (the axis joint servo module directly connected to the base of the manipulator).

In an embodiment, the parameter self-tuning method used by the system is a relay feedback method. During the implementation, none of the joint servo axises performs any macroscopic motion trajectory, and only exhibits a micro-vibration state lasting for about 1 second to complete parameter adjustment and initialization of one axis. Therefore, it takes about 6 seconds to complete the execution of 6 axises.

After the initial parameters of each axis are set, the digital twin system will automatically send a set of joint action commands to the servo system of the manipulator, then the actual servo system of the manipulator will execute corresponding actions according to the action commands, and the actual joint actions are displayed in real time on the digital twin system interface. If the position control tracking error of each axis joint servo module is within a specified set value, the parameter initialization operation is completed. If an axis tracking error is higher than the set value, it is necessary to re-perform the parameter adjustment of the joint separately or manually until the requirements are met.

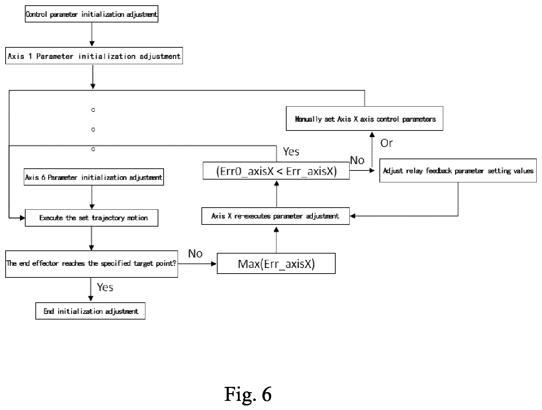

The logical block diagram of the overall tuning process is shown in Fig. 6.

In Fig. 6,

Err axisX represents a position tracking error of the X axis, wherein X is one of 1, 2, 3, 4, 5 and 6;

Err0_axisX represents the position tracking error after the parameter adjustment of X-axis is re-performed;

Max(Err axisX) represents the tracking error of the axis with the maximum tracking error among Axis 1, Axis 2, Axis 3, Axis 4, Axis 5 and Axis 6.

As previously described, the initial parameter adjustments are performed sequentially from Axis 1 to Axis 6. After performing once, the system judges whether the centroid of the end joint reaches a specified trajectory target point (the error between the centroid of the end joint and the trajectory target point is within a set range), and if so, it is completed. If it is not reached (the error with the trajectory target point is out of the set range), the axis with the maximum tracking error of joint position will be found from Axis 1 to Axis 6 for re-parameter adjustment. If the tracking error after this adjustment is less than the first error, the trajectory movement of the overall servo system of the manipulator will be re-executed, and it is judged whether the centroid point of the end joint reaches the trajectory target point. If the tracking error after this adjustment is greater than the first error, there are two options. It either manually adjusts the axis parameter or adjusts the parameter setting value of relay feedback, then re-executes the parameter adjustment of the axis and judges the tracking error.

The joint position tracking error and the end joint centroid tracking error in the step of Fig. 6 are different concepts. The joint position tracking error refers to the position tracking error of the position control loop based on the position feedback of the motor encoder running inside the joint servo motor drive. The tracking error of the centroid trajectory of the end joint refers to the error between the spatial position coordinates of the position trajectory which has traveled in the physical space of the xyz coordinate system to reach the end point and the spatial position coordinates of the trajectory command at the end point under the action of the motion trajectory command of the servo system of the manipulator.

The description above is only specific embodiments of the present invention, but the scope of protection of the present invention is not limited thereto. Any changes and substitutions which can be easily made by those skilled in the art within the technical scope of the present invention disclosed are included in the scope of protection the present invention. Therefore, the scope of protection of the present invention shall be subject to the scope of protection of the claims.

**Claims**

1. A method for tuning the overall performance of robot manipulator servo systems, wherein the servo system of the manipulator comprises at least two axis joint servo modules connected in sequence, **characterized in that** the performance tuning method comprises the steps of:

    S101, establishing a manipulator digital twin system composed of digital twin models based on each joint servo module of the manipulator of the robot;
    S102, executing a performance feedback action of the servo system of the manipulator in the digital twin system; collecting expected result data and real result data from the digital twin system performing the performance feedback action;
    S103, deriving grey correlation related data based on the expected result data and the real result data;
    S104, evaluating the execution comprehensive performance of each of the axis joints by a grey correlation algorithm based on the grey correlation related data; and
    S105, tuning the axis joint servo module with a low comprehensive performance.

2. The performance tuning method according to claim 1, **characterized by** further comprising S106 of repeating the S102-S105 to further optimize the servo system of the manipulator.

3. The performance tuning method according to claim 1, **characterized in that** the grey correlation related data comprises: a position tracking error $e_\theta$, a position loop gain value $K_p$, a velocity loop gain value $K_v$, a velocity loop integral gain value $K_i$, and a velocity error $e_w$ for the axis joint servo module performing the performance feedback action; and

the position tracking error $e_\theta$ and the velocity error $e_w$ are based on a comparison of the expected result data with the real result data.

4. The performance tuning method according to claim 3, **characterized in that** the method for evaluating the comprehensive performance of each of the axis joint servo modules based on the grey correlation algorithm specifically comprises:

setting a target matrix:

$$X_0 = (x_0(1), x_0(2), x_0(3), x_0(4), x_0(5))$$

If the test result of the position tracking error of the servo system of the manipulator is expressed in the form of an orthogonal matrix as:

$X_i = (x_i(1), x_i(2), x_i(3), x_i(4), x_i(5))$, i=1, 2, ..., n; where n represents the number of the axis joint servo modules; the grey correlation coefficient between the test result and the target value is expressed as:

$$\gamma(x_0(k), x_i(k)) = \frac{\rho max_i max_k |x_0(k) - x_i(k)|}{|x_0(k) - x_i(k)| + \rho max_i max_k |x_0(k) - x_i(k)|}$$

where $\gamma$ represents the correlation degree between $X_i$ and $X_0$ at a point k, and the mean value thereof is the grey correlation degree, as shown in the following formula:

$$\xi(X_0, X_i) = \frac{1}{n} \sum_{k=1}^{n} \gamma(x_0(k), x_i(k))$$

where k=1, 2, ..., 5; i=1, 2, ..., n; and $\rho$ is a constant.

5. The performance tuning method according to claim 1, **characterized in that** the data for constructing the twin model comprises:

$\theta(t)$: an angle value of the axis joint servo module changing with time in real time;
$\Omega(t)$: a speed value of the axis joint servo module changing with time in real time;
$i(t)$: a current value of the axis joint servo module changing with time in real time;
$\alpha(t)$: an acceleration value of the axis joint servo module changing with time in real time.

6. The performance tuning method according to claim 1, **characterized in that** the data for constructing the twin model further comprises: visual sensor information, torque sensor information, and safety sensor information.

7. The performance tuning method according to 1, **characterized in that** the digital twin system is further configured for acquiring a motion equation of the manipulator of the performance feedback action to generate a command trajectory.

8. The performance tuning method according to claim 7, **characterized in that** the digital twin system is provided with a graphical interface for displaying an attitude change trajectory of each of the axis joint servo modules in an xyz space and the command trajectory.

9. The performance tuning method according to claim 8, **characterized in that** the attitude change trajectory and the command trajectory are based on a centroid point trajectory description.

10. The performance tuning method according to claim 1, **characterized in that** the method further comprises an initial parameter adjustment process before the S101;

the initial parameter adjustment process comprises the steps of

S201, initializing and adjusting control parameters of the servo system of the manipulator;

S202, initializing and adjusting control parameters sequentially according to the order from the end to the root of each of the axis joint servo modules in the servo system of the manipulator;

S203, executing a set trajectory movement by the servo system of the manipulator;

S204, comparing whether an end effector of the manipulator reaches a specified target point based on the digital twin system, and if so, completing the initial parameter adjustment process, and if not, performing the following steps:

S301, selecting, based on the digital twin system, the axis joint servo module with the maximum tracking error to perform initialization and tuning;

S302, whether the tracking error of the axis joint servo module after the initialization and tuning decreases, and if so, skipping to the S203, and if not,

adjusting the relay feedback parameter value of the axis joint servo module with the maximum tracking error or manually setting the axis control parameter of the axis joint servo module with the maximum tracking error; and

after manually setting the axis control parameter of the axis joint servo module with the maximum tracking error, skipping to the S301.

A manipulator servo system successively executes trajectories 1, 2, 3, 4, 5

↓

A digital twin system successively records related performance parameters of each joint under each trajectory

↓

Execute a grey correlation algorithm

↓

Obtain an Axis X requiring tuning

↓

Perform parameter tuning on the Axis X

↓

The manipulator servo system successively executes the trajectories 1, 2, 3

↓

Does the control precision satisfy a requirement? — No

↓ Yes

Out

Fig. 1

Fig. 2

Fig. 3

```
┌─────────────────────────┐
│     Centroid point      │
│  trajectory calculation │
└─────────────────────────┘
             │
             ▼
┌───────────────────────────────────────────────────────────────────────┐
│ Collect Axis 6-Axis 1 joint servo motor position feedback angle initial values θ6 │
│ (k0), θ5(k0), θ4(k0), θ3(k0), θ2(k0) and θ1(k0); retrieve the physical dimension │
│ data of the manipulator;                                                │
└───────────────────────────────────────────────────────────────────────┘
             │
             ▼
┌───────────────────────────────────────────────────┐
│ Initial position data Dxyz (k0) of end vision sensors of │
│ the manipulator                                   │
└───────────────────────────────────────────────────┘
             │
             ▼
┌───────────────────────────────────────────────────┐
│ When the equation of motion is performed, the manipulator │
│ starts for motion based on the trajectory command │
└───────────────────────────────────────────────────┘
             │
             ▼
┌───────────────────────────────────────────────────┐
│ Collect θ6(k), θ5(k), θ4(k), θ3(k), θ2(k), θ1(k); │
│            Dxyz (k) in real time                  │
└───────────────────────────────────────────────────┘
             │
             ▼
┌───────────────────────────────────────────────────┐
│              Real-time calculation:               │
│ θ6(k)-θ6(k-1); θ5(k)-θ5(k-1); θ4(k)-θ4(k-1);     │
│ θ3(k)-θ3(k-1); θ2(k)-θ2(k-1); θ1(k)-θ1(k-1);     │
│              Dxyz (k)-Dxyz (k-1);                 │
└───────────────────────────────────────────────────┘
             │
             ▼
┌───────────────────────────────────────────────────┐
│ Centroid point trajectory data calculation        │
│      and trajectory generation                    │
└───────────────────────────────────────────────────┘
```

Fig. 4

Fig. 5

Control parameter initialization adjustment

Axis 1 Parameter initialization adjustment

Manually set Axis X axis control parameters

Axis 6 Parameter initialization adjustment

Yes

(Err0_axisX < Err_axisX)

No

Or

Adjust relay feedback parameter setting values

Execute the set trajectory motion

Axis X re-executes parameter adjustment

The end effector reaches the specified target point?

No

Max(Err_axisX)

Yes

End initialization adjustment

Fig. 6

## INTERNATIONAL SEARCH REPORT

| International application No. |
|---|
| **PCT/CN2022/132715** |

**A.     CLASSIFICATION OF SUBJECT MATTER**

B25J9/16(2006.01)i

According to International Patent Classification (IPC) or to both national classification and IPC

**B.     FIELDS SEARCHED**

Minimum documentation searched (classification system followed by classification symbols)

IPC：  B25J

Documentation searched other than minimum documentation to the extent that such documents are included in the fields searched

Electronic data base consulted during the international search (name of data base and, where practicable, search terms used)

CNTXT, ENTXT, DWPI, CNKI: 机器人, 机械臂, 机械手, 数字孪生, 反馈, 伺服, 精度, 优化, robot+, manipulator?, mechanical, arm?, digital twin, servo, feedback

**C.     DOCUMENTS CONSIDERED TO BE RELEVANT**

| Category* | Citation of document, with indication, where appropriate, of the relevant passages | Relevant to claim No. |
|---|---|---|
| X | CN 110605709 A (SOUTHWEST JIAOTONG UNIVERSITY et al.) 2019-12-24 (2019-12-24)<br>    description, paragraphs 0051-0093, and figures 1-2 | 1-2, 5-9 |
| PX | CN 115026835 A (SHANGHAI SAGE INTELLIGENT TECHNOLOGY CO., LTD.) 2022-09-09 (2022-09-09)<br>    claims 1-10 | 1-10 |
| A | CN 111496781 A (ZHEJIANG UNIVERSITY) 2020-08-07 (2020-08-07)<br>    entire document | 1-10 |
| A | CN 114609917 A (OBSIDIAN ROBOT (SHANGHAI) CO., LTD. et al.) 2022-06-10 (2022-06-10)<br>    entire document | 1-10 |
| A | CN 112894812 A (SUN YAT-SEN UNIVERSITY) 2021-06-04 (2021-06-04)<br>    entire document | 1-10 |
| A | US 2019087544 A1 (GENERAL ELECTRIC CO.) 2019-03-21 (2019-03-21)<br>    entire document | 1-10 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 April 2023** | **14 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

International application No.

**PCT/CN2022/132715**

| Patent document cited in search report | | | Publication date (day/month/year) | Patent family member(s) | Publication date (day/month/year) |
|---|---|---|---|---|---|
| CN | 110605709 | A | 24 December 2019 | None | |
| CN | 115026835 | A | 09 September 2022 | None | |
| CN | 111496781 | A | 07 August 2020 | None | |
| CN | 114609917 | A | 10 June 2022 | None | |
| CN | 112894812 | A | 04 June 2021 | None | |
| US | 2019087544 | A1 | 21 March 2019 | None | |

Form PCT/ISA/210 (patent family annex) (July 2022)